# EUROPÄISCHE PATENTSCHRIFT

(11) **EP 0 470 538 B1**
(45) Veröffentlichungstag und Bekanntmachung des Hinweises auf die Patenterteilung: **06.10.1993**
(21) Anmeldenummer: 91113095.3
(22) Anmeldetag: 03.08.1991
(51) Int. Cl.: B65G 1/10, B65G 1/08

(54) **Regal zur Lagerung von Abstandhalter-Profilen für Isolierglasscheiben**
Storage rack for spacer profiles for insulating glass panes
Rayonnage pour le stockage d'écarteurs profilés pour vitres isolantes

(30) Priorität: 09.08.1990 DE 4025230
(43) Veröffentlichungstag der Anmeldung: 12.02.1992
(73) Patentinhaber: Franz Xaver Bayer Isolierglasfabrik KG, 79212 Elzach (DE)
(72) Erfinder: Bayer, Franz, W-7807 Elzach (DE)
(74) Vertreter: Schmitt, Hans, Dipl.-Ing.

(56) Entgegenhaltungen:
- DE-A- 1 779 195
- DE-A- 3 315 847
- DE-A- 3 639 468

## Beschreibung

Die Erfindung betrifft ein Regal zur Lagerung von Hohlprofilen zur Herstellung von Abstandhalter-Rahmen oder dergleichen für Isolierglasscheiben oder von sonstigen Profilen, Schienen, Stangen oder dergleichen Langmaterial, mit mehreren übereinander angeordneten Fächern, wobei die Profile in Längsrichtung der Fächer gelagert sind und beim Entnehmen quer zu ihrer Längserstrekkung aus Entnahmeöffnungen der Fächer entnehmbar sind. Siehe Dokument DE-A-3 315 847.

Regale zur Lagerung von Hohlprofilen oder Stangenmaterialien sind in vielfältiger Form auf vielen Sektoren der Technik bekannt.

Vor allem für die Herstellung von Abstandhalter-Rahmen von Isolierglasscheiben werden im Hinblick darauf, daß diese Abstandhalter-Rahmen aus einem durchgehenden Hohlprofilstück gebogen werden, mehr und mehr solche Regale benötigt, von denen aus die Entnahme der Hohlprofile und auch die Beschickung der Biegevorrichtungen und dergleichen Herstellungsmaschinen einfach ist.

Bei Regalen zur Lagerung von Stangenmaterial für andere Zwecke sind Regale mit Tiefzügen bekannt, bei denen die einzelnen Stäbe und Stangen in ihrer Längserstreckungsrichtung aus der Entnahmeöffnung herausgefahren werden können, um dann nach oben abgehoben zu werden. Dies wäre zur Beschickung von Herstellungsmaschinen für Abstandhalter-Rahmen zu langwierig, aufwendig und würde zu viel Platz benötigen.

Es besteht deshalb die Aufgabe, ein Regal oder Lagergestell der eingangs erwähnten Art zu schaffen, welches leicht gebaut ist, kompakt auf engem Raum Platz findet, so daß es nahe einer Verarbeitungsmaschine untergebracht werden kann, und dennoch eine einfache Entnahme und möglichst lagegerechte Zuführung der zu verarbeitenden Profile erlaubt.

Zur Lösung dieser Aufgabe ist das eingangs erwähnte Regal in überraschender Weise dadurch gekennzeichnet, daß die Fachböden im Sinne einer Vergrößerung und einer Verkleinerung der Fachhöhe wenigstens im Bereich der Entnahmeöffnung auf- und abbewegbar sind und daß sich jeweils der nächsthöhere Fachboden auf den in dem unter ihm befindlichen Fach gelagerten Profilen abstützt und - zum Entnehmen von Profilen - anhebbar ist.

Die in den Regalen befindlichen Hohlprofile dienen also gleichzeitig dazu, die oberhalb von ihnen befindlichen weiteren Hohlprofile mitabzustützen. In überraschender Weise werden also die gelagerten Stangen und Profile gewissermaßen zur Stabilisierung und Aussteifung des Regales selbst mitherangezogen, so daß die oberhalb des untersten Regalfaches befindlichen Fächer erheblich leichter gebaut und konstruiert sein können, als es der von ihnen aufzunehmenden Last jeweils entspricht. Entsprechend leicht und platzsparend kann die gesamte Regalkonstruktion sein. Lediglich das unterste Fach, auf welchem sich die darüber befindlichen Fächer und Profile ebenfalls - beispielsweise durch leichte Durchbiegung der die Fächer bildenden Konstruktionselemente - abstützen, muß seinerseits gegen Nachgiebigkeit versteift oder abgestützt sein. In scheinbar widersprüchlicher Weise erhalten also die gelagerten Profile die zusätzliche Funktion, die in Fächern oberhalb von ihnen befindlichen Vorräte mitzutragen, so daß sich das Regal gerade zusammen mit seiner Ladung selbst stabilisiert.

Die Entnahme aus dem jeweiligen Fach wird dadurch ermöglicht, daß der darüber befindliche Fachboden geringfügig angehoben wird, bis er die von ihm beaufschlagten Profile freigibt.

Dabei ist es zweckmäßig, wenn die Fächer und die vorzugsweise aus quer zu den gelagerten Profilen angeordneten Holmen oder dergleichen bestehenden Fachböden schräg zu der Entnahmeöffnung der Fächer hin abfallend geneigt sind. Somit können die nach dem Anheben eines darüber befindlichen Fachbodens freigegebenen Profile gewissermaßen selbsttätig zu der Entnahmeöffnung gelangen, was die Entnahme weiter erleichtert.

Für eine möglichst schnelle und einfache Beschickung des Regales, die beim Stand der Technik häufig von der Entnahmeöffnung her erfolgt, also während der Beschickung eine Entnahme verhindert, ist es nach einer Weiterbildung der Erfindung möglich, daß an der den Entnahmeöffnungen abgewandten Seite des Regales und der Fächer Zuführöffnungen zum Beschicken des Regales vorgesehen sind. Somit kann das Nachfüllen der einzelnen Regalfächer schon erfolgen, während noch ein gewisser Rest in den einzelnen Fächern vorhanden ist und vor allem kann dieses Nachfüllen zu nahezu beliebigen Zeiten erfolgen, ohne den Entnahmevorgang und eventuell im Bereich der Entnahmeöffnung befindliche Übergabe- und Übernahme-Vorrichtungen zu beeinträchtigen.

Die Fachböden und die sie vorzugsweise bildenden Holme können in ihrem den Entnahmeöffnungen abgewandten Bereich beweglich gelagert sein und an der Entnahmeöffnung kann eine Hubvorrichtung, vorzugsweise wenigstens ein Hubzylinder oder dergleichen vorgesehen sein, dessen bei Druckbeaufschlagung in Längsrichtung verstellbarer Teil - vorzugsweise seine Kolbenstange - jeweils den über einem zu entleerenden Fach befindlichen Fachboden untergreift. Sollen also aus einem bestimmten Fach Profile entnommen werden, wird die Hubvorrichtung auf den über diesem Fach befindlichen Fachboden gerichtet und angehoben, bis die unter seiner Belastung erfolgte Durchbiegung und Ablagerung auf den zu entnehmenden Profilen überwunden ist, so daß diese dann frei werden und - bei schräger Anordnung des Fachbodens und seiner Holme - zu der Entnahmeöffnung vorrutschen oder sogar aus ihr herausrutschen können.

Um die Fachböden auf unterschiedlich dicke Profile einstellen zu können, die durch die bewegliche Lagerung der Holme schon vorgegeben ist, kann der Anschlag für die Hubvorrichtung an der Unterseite des/der Fachböden nahe der Entnahmeöffnung höhenverstellbar, insbesondere als Stellschraube ausgebildet sein. Je mehr dieser Anschlag in Richtung gegen die Hubvorrichtung hin verstellt wird, um so mehr wirkt sich die Hubvorrichtung zum Anheben aus, das heißt um so größere Querschnitte können berücksichtigt werden.

Dabei sei an dieser Stelle erwähnt, daß die Hubvorrichtung nicht unbedingt mit Hilfe eines auf Druck beanspruchten Kolbens oder dergleichen, sondern auch je nach Platzanordnung mit Hilfe eines von oben wirkenden Zugelementes an den einzelnen Fachböden angreifen könnte.

Eine besonders zweckmäßige Ausgestaltung der Erfindung, die einerseits eine kontinuierliche Abnahme eines Profiles nach dem anderen gestattet, ohne jedesmal die Fachböden anheben zu müssen, andererseits aber trotzdem die Abstützung der höheren Fachböden jeweils auf der tieferen Lage von Hohlprofilen gestattet, und deshalb eine ganz erhebliche und zweckmäßige Bedeutung hat, kann darin bestehen, daß an der Unterseite der Fachböden bzw. der sie bildenden Holme nahe der Entnahmeöffnung eine in Entnahmerichtung orientierte Platte oder dergleichen Verdickung zur Abstützung auf den in dem tieferen Fach befindlichen Profilen angeordnet ist, die mit Abstand vor der Entnahmeöffnung endet. Es wird also innerhalb der Fächer nahe der Entnahmeöffnung ein Bereich gebildet, in dem die Fächer wegen des Fehlens dieser Platte eine etwas grössere Höhe haben, also in diesem Bereich befindliche Hohlprofile nicht mehr einklemmen. Wird nun ein oberer Fachboden angehoben, können die unter ihm befindlichen Profile vorrutschen, wobei so viele Profile freigegeben werden, wie es der Abstand vor der Entnahmeöffnung erlaubt. Diese Hohlprofile können dann ohne weitere Hubvorgänge nacheinander oder gegebenenfalls auch gleichzeitig entnommen werden.

Dabei ist es zweckmäßig, wenn an der Entnahmeöffnung an der Oberseite der Fachböden oder der sie bildenden Holme Anschläge mit Abstand zu der an der Unterseite des darüber befindlichen Fachbodens befindlichen Stützplatte angeordnet sind. Die nach dem Anheben der Stützplatte nachrutschenden und in den etwas höheren Fachbereich gelangenden Profile werden von dem Anschlag an einem sofortigen Herausrutschen aus dem jeweiligen Fach gehindert und stehen nun für weitere Arbeitsvorgänge zur Verfügung, während dennoch das Regal in sich stabilisiert bleibt, weil die einzelnen Fachböden auf den übrigen, im Bereich der Stützplatte befindlichen Profilen abgestützt sind.

Eine weitere zweckmäßige Ausgestaltung der Erfindung, die es ermöglicht, die Entnahme und auch die Beschickung jeweils an einer gleichbleibenden Stelle vorzunehmen, kann darin bestehen, daß die insbesondere schräg im Sinne einer Gleitebene für die zu entnehmenden Profile angeordneten Fächer an einem auf- und abbewegbaren Stützgestell, vorzugsweise einem Hubtisch insbesondere mit Hubscheren, befestigt sind und daß im Bereich der Entnahmeöffnungen eine Übergabe, insbesondere ein Übergabetisch angeordnet ist, auf dessen Niveau die einzelnen Entnahmeöffnungen durch Heben und Senken des Hubtisches einstellbar sind. Es leichtet ein, daß solche Hebe- und Senkbewegungen auch jeweils die Beschickungsöffnungen der Regalfächer in unterschiedliche Höhenlagen bringen, so daß auch eine Anpassung an eine Zuführvorrichtung für Profile auf diese Weise einfach möglich ist.

In vorteilhafter Weise kann dabei im Bereich der Beschikkungsöffnungen eine Zuführbahn für quer zu den Fächern einschiebbare Profile vorgesehen sein, auf deren Höhe die Eintrittsöffnungen der Fächer einstellbar sind, wobei die gegenüber dem Übergabetisch oder dergleichen erhöhte Zuführung vorzugsweise um das Maß höherliegt, um welches die Beschickungsöffnung eines Faches gegenüber seiner Entnahmeöffnung erhöht ist. Dies bedeutet, daß die Einstellung einer Entnahmeöffnung auf das Niveau der Übergabe gleichzeitig eine Einstellung der Beschickungsöffnung dieses Faches auf die Höhe der Zuführung bewirkt. Somit kann gegebenenfalls nahezu gleichzeitig oder unmittelbar nacheinander das teilweise oder völlige Entleeren eines Faches und sein Füllen vorgenommen werden.

Ausgestaltungen der Hubvorrichtung und der Anordnung des Anschlages für sie, der gemäß der vorstehenden Darlegungen höhenverstellbar sein kann, sind Gegenstand der Ansprüche 10 bis 13.

Für eine Automatisierung der Entnahme von Profilen ist es zweckmäßig, wenn die Anschläge an den Fachböden der Entnahmeöffnung, gegen welche die Profile beim Anheben des nächsthöheren Fachbodens zunächst rutschen, rückziehbar und/oder Greifer zum Erfassen der zwischen der Stützplatte an der Unterseite des nächsthöheren Fachbodens und der am Ende des Fachbodens befindlichen Anschläge angeordneten Profile vorgesehen sind. Es ist aber auch möglich, die in dem Fachbereich mit etwas größerer Höhe zwischen Stützplatte und Anschlag befindlichen Profile von Hand zu entnehmen.

Wie bereits erwähnt, können die Fachböden beweglich gelagert sein. Dies bedeutet, daß in einem gewissen Umfange eine selbsttätige Anpassung an Profile unterschiedlicher Querschnitte und Abmessungen möglich ist, jedoch können außerdem die Abstände der einzelnen Fachböden und damit die Höhe der Fächer zur Anpassung an unterschiedliche Querschnitt und Querschnittsabmessungen der zu lagernden Profile auch verstellbar sein, so daß die Fächerhöhe jeweils so eingestellt werden kann, daß die zum Teil auf einer gewissen Nachgiebigkeit der Fachböden beruhende Einklemmung der Profile in dem nächst tieferen Fach keine zu große Verformung des jeweiligen Fachbodens erforderlich macht. Dabei können zum Verstellen der Fachhöhen an den die einzelnen Holme verbindenden Querträgern, vorzugsweise an dem Traggestell des Hubtisches, abstandhaltende Stellschrauben vorgesehen sein.

Um die gelagerten Hohlprofile bei der Belastung mit den nächst höheren Fächern zu schonen und ungewollte Abdrücke zu vermeiden, ist es zweckmäßig, wenn die Abstützplatten aus Kunststoff bestehen.

Das Beschicken und Nachfüllen wird erleichtert, wenn die Abstützplatten den Beschickungsbereich zum Nachfüllen von Profilen freilassen, insbesondere bis in den Bereich, der beim Anheben eines Fachbodens zur Entnahme noch mitangehoben wird. Zunächst einmal ist dann der Beschickungsbereich der Fächer wiederum etwa um die Dicke der Stützplatte höher, so daß bis gegen die Stützplatte hin problemlos Profile nachgefüllt werden können. Wird nun zum Entnehmen von Profilen ein Fachboden und seine Stützplatte angehoben, können die bisher nicht im Bereich der Stützplatte befindlichen Profile nun auch unter die Stützplatte nachrutschen. Beispielsweise kann die Abstützplatte von der Entnahmeöffnung aus gesehen bis etwa in die Mitte zwischen Entnahmeöffnung und Beschickungsöffnung reichen.

Wie schon angedeutet, sind die Fachböden und die sie bildenden Holme zweckmäßigerweise elastisch, biegsam und durch ihre Füllung gegen die unter ihnen lagernden Profile verformbar und beim Anheben gegenüber einer von der Entnahmeöffnung entfernten Auflage etwas nach oben biegbar. Zwar könnten die Fachböden auch schwenkbar gelagert sein, jedoch würde dies den konstruktiven Aufwand erhöhen.

Um das Nachrutschen der Profile quer zu ihrer Längserstrekkung innerhalb der schrägen Fächer zu erleichtern und den Schrägungswinkel und damit die Höhe des Regales nicht zu groß machen zu müssen, können die Fachböden, insbesondere die sie bildenden Holme, an ihrer Oberseite mit einer gleitfähigen Auflage versehen sein. Diese Auflage kann beliebig durch Aufkleben entsprechender Folien, Bleche oder dergleichen durch Aufspritzen oder gegebenenfalls durch Aufmontieren entsprechender gleitfähiger Profilteile gebildet sein.

Insgesamt ergibt sich ein Regal zur Lagerung von Profilen, welches bei vergleichsweise leichter und einfacher Konstruktion dennoch hohe Gewichte und entsprechend viele Profile aufnehmen kann, weil diese selbst zur Stabilisierung und Aussteifung des Regales mitherangezogen werden. Dennoch ist gleichzeitig die Entnahme und die Beschickung des Regales sehr einfach möglich, so daß ein Fertigungsprozeß, bei welchem solche Hohlprofile beispielsweise zur Herstellung von Abstandhalter-Rahmen für Isolierglasscheiben benötigt werden, entsprechend gefördert und rationalisiert werden kann. In vorteilhafter Weise ist dabei die Beschickung und die Entnahme voneinander unabhängig und kann theoretisch sogar gleichzeitig erfolgen. Somit müssen diese Vorgänge nicht aufeinander abgestimmt sein, so daß es beim Nachfüllen des Regales nicht zu Betriebsunterbrechungen bei der Entnahme und der darauf folgenden Fertigung kommen muß.

Da gleichzeitig das Lagergestell sehr einfach ist und keiner aufwendigen Tiefzüge oder sonstiger Zusatzeinrichtungen für die Entnahme bedarf, ist es preiswert herstellbar.

Nachstehend ist die Erfindung mit Einzelheiten anhand der Zeichnung noch näher beschrieben. Es zeigt in schematisierter Darstellung:
- Fig. 1: eine Seitenansicht eines erfindungsgemäßen Regales oder Fächermagazines mit schrägstehenden, an einem Gestell auf einem Hubtisch befestigten Regalfächern und einem Übergabetisch an der Entnahmeöffnung sowie einer an dem jeweiligen Fachboden einhängbaren Beschickung an der der Entnahmeöffnung entgegengesetzten Seite der Fächer,
- Fig. 2: eine Draufsicht auf das Regal und einen Übergabetisch gem. Fig.1,
- Fig. 3: in vergrößertem Maßstab eine Seitenansicht der Entnahmeöffnung und des sich anschließenden Bereiches der einzelnen Fächer sowie die Hubvorrichtung zum Anheben jeweils des nächsthöheren Fachbodens im Bereich der Entnahmeöffnung sowie
- Fig. 4: eine Stirnansicht mit Blick auf die Entnahmeöffnungen gem. dem Pfeil X in Fig.3.

Ein im ganzen mit 1 bezeichnetes Regal dient zur Lagerung von Hohlprofilen 2, die zur Herstellung von Abstandhalter-Rahmen für Isolierglasscheiben bestimmt sind. In dem Regal 1 können aber auch andere Profile, Schienen, Stangen oder dergleichen Langmaterial in gleicher Weise gelagert und entnommen werden, wie es im folgenden näher beschrieben ist.

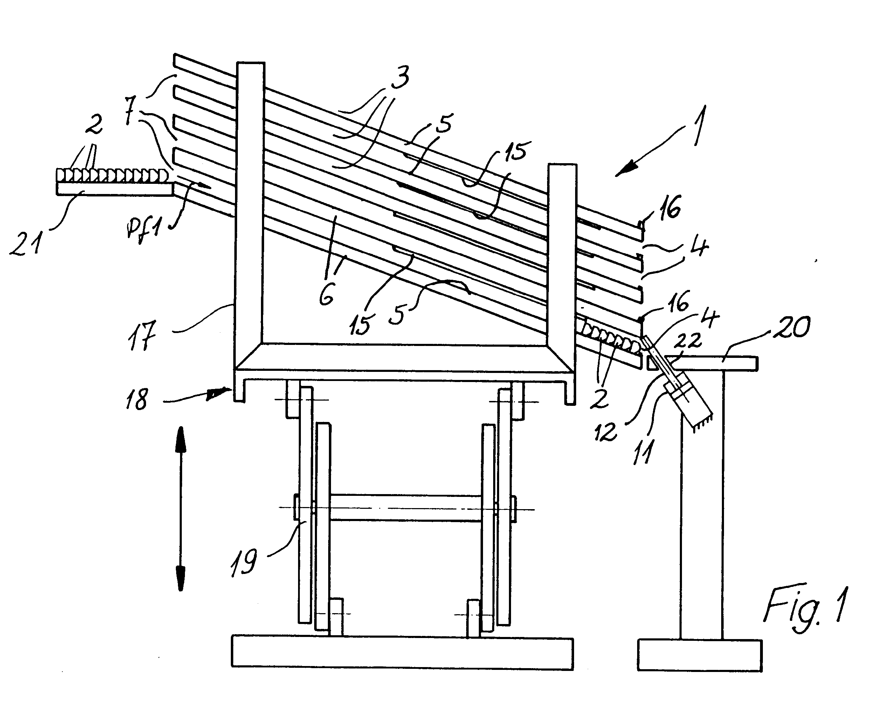

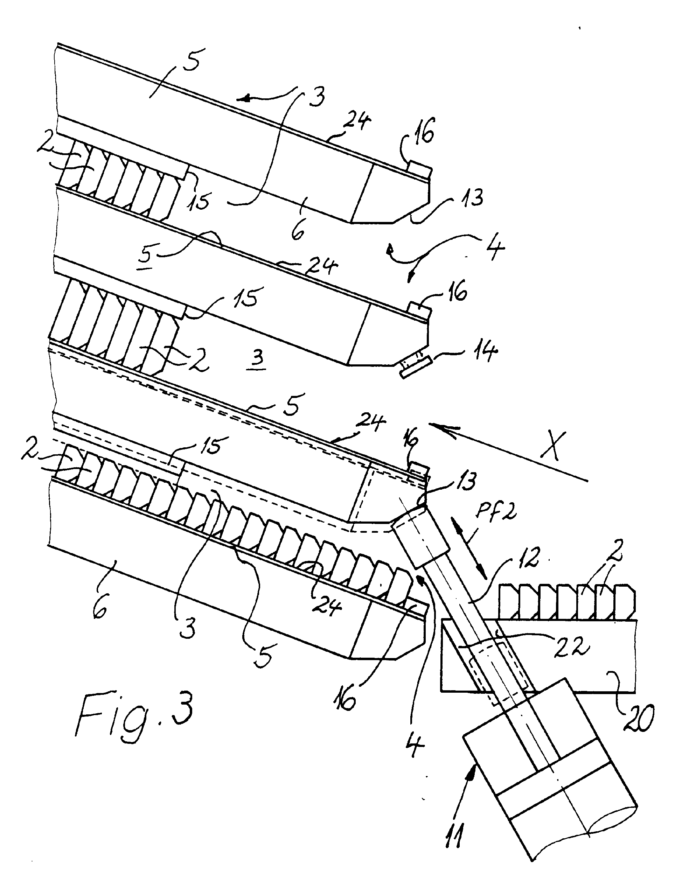

Gemäß Fig.1 u.3 hat das Regal 1 mehrere übereinander angeordnete Fächer 3, wobei die Profile 2 in Längsrichtung dieser Fächer 3 gelagert sind und beim Entnehmen quer zur ihrer Längserstreckung aus Entnahmeöffnungen 4 entgegen der Richtung des Pfeiles X in Fig.3 entnehmbar sind.

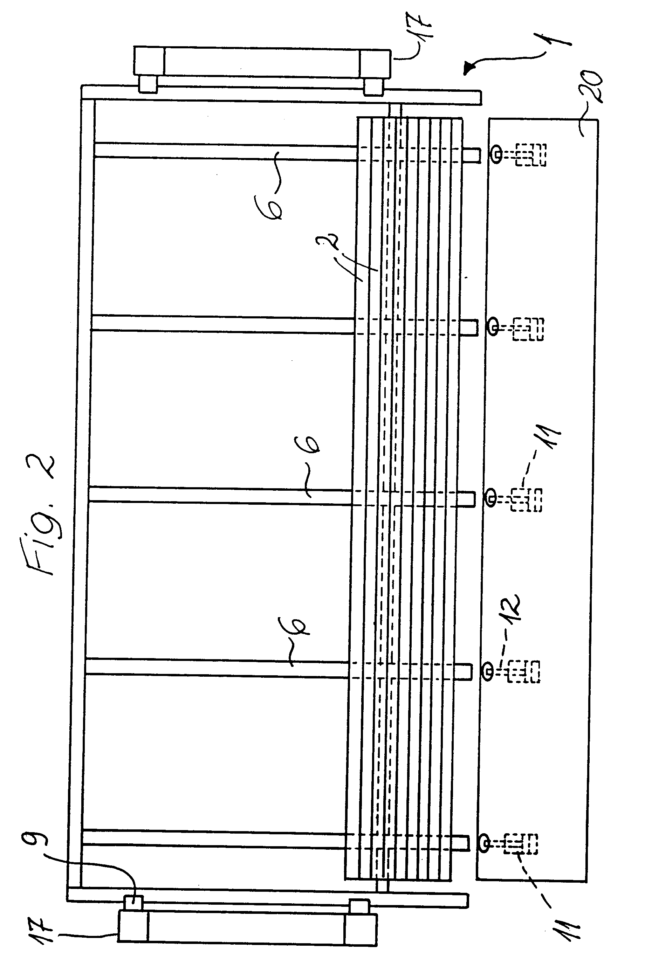

Vor allem Fig.3 verdeutlicht, daß die Fachböden 5 - bis auf den untersten Fachboden - im Sinne einer Vergrößerung und einer Verkleinerung der Fachhöhe wenigstens im Bereich der Entnahmeöffnung 4 auf- und abbewegbar sind und daß sich jeweils der nächsthöhere Fachboden 5 auf den in dem unter ihm befindlichen Fach 3 gelagerten Profilen 2 abstützt und - zum Entnehmen von Profilen 2 - anhebbar ist. In Fig.3 ist der oberhalb des unteren Faches 3 befindliche Fachboden 5 aus seiner gestrichelten Lagerposition angehoben, so daß die unter ihm befindlichen Hohlprofile 2 nicht mehr von oben her von diesem Fachboden 5 beaufschlagt sind. Sie können demgemäß aus ihrer zuvor von diesem oberen Fachboden 5 eingeklemmten Position entnommen werden, was im Ausführungsbeispiel dadurch erleichtert ist, daß die Fächer 3 und die Fachböden 5, die im Ausführungsbeispiel gemäß Fig.2 aus quer zu den gelagerten Profilen 2 angeordneten Holmen 6 bestehen, schräg zu der Entnahmeöffnung 4 der Fächer 3 hin geneigt sind. Wird also ein Fachboden 5 so angehoben, daß die ihn mitabstützenden, unter ihm befindlichen Hohlprofile 2 nicht mehr eingeklemmt werden, können sie auf den schrägen Holmen 6 in Richtung zu der Entnahmeöffnung 4 rutschen, so daß also dadurch die Entnahme vorbereitet werden kann.

Gemäß Fig.1 sind an der den Entnahmeöffnungen 4 abgewandten Seite des Regales 1 und der Fächer 3 Zuführöffnungen 7 zum Beschicken des Regales 1 vorgesehen. Somit können Hohlprofile 2 problemlos gemäß dem Pfeil Pf 1 nachgefüllt werden.

Fig. 3 verdeutlicht, daß die gelagerten Hohlprofile 2 eines unteren Faches die darüber befindliche Belastung mit-tragen, also zur Aussteifung und Stabilisierung des Regales selbst beitragen, so daß dieses selbst in seiner Konstruktion nicht alleine darauf abgestellt sein muß, die gesamte Belastung aufnehmen zu können. Entsprechend leicht und preiswert kann die gesamte Konstruktion sein.

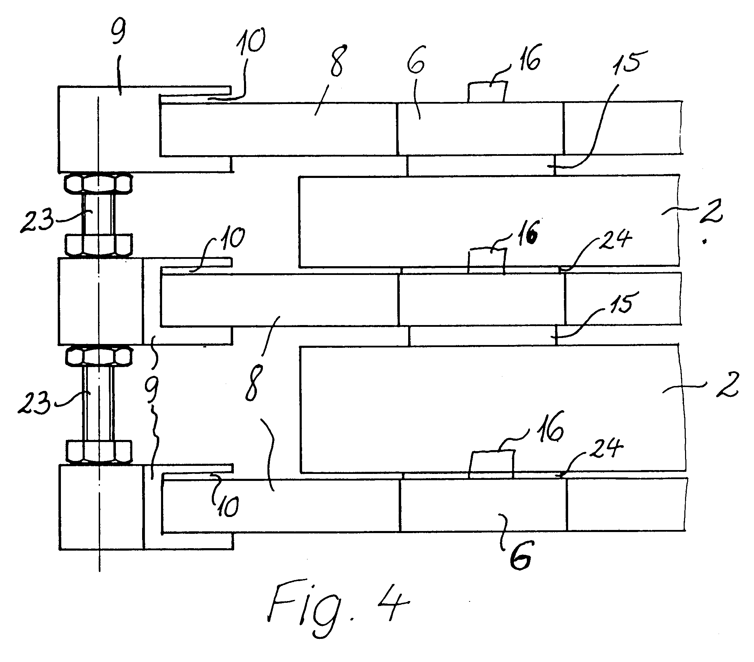

Vor allem in Fig. 4 ist angedeutet, daß die Fachböden 5 und die sie bildenden Holme 6 in ihrem den Entnahmeöffnungen 4 abgewandten Bereich beweglich gelagert sind, wozu es genügt, daß die die Enden von den Fachböden 5 gehörenden Querprofile 8 oder dergleichen, die auch mit den Holmen 6 verbunden sind, in etwa U-förmigen Haltern 9 gelagert sind, welche nach oben hin ein Spiel 10 haben.

Gemäß den Fig. 1 bis 3 ist im Bereich der Entnahmeöffnung 4 eine Hubvorrichtung 11, im Ausführungsbeispiel ein Hubzylinder mit Kolben und Kolbenstange vorgesehen, dessen bei Druckbeaufschlagung in Längsrichtung verstellbarer Teil, nämlich die Kolbenstange 12 jeweils den über einem zu entleerenden Fach 3 befindlichen Fachboden 5 untergreift. Fig.3 zeigt dabei, wie bereits erwähnt, eine Entnahmeposition der Hubvorrichtung 11, bei der ein Fachboden 5 oberhalb eines Faches 3, aus dem Hohlprofile 2 freigegeben werden sollen, angehoben ist, während in gestrichelter Darstellung die zurückgezogene Position und Ruhestellung dieser Hubvorrichtung 11 und der dann wieder abgesenkte Fachboden 5 erkennbar sind.

Dabei verdeutlicht Fig.3 auch, daß an der Unterseite der die Fachböden 5 bildenden Holme 6 unmittelbar unter ihren Enden eine Schrägfläche 13 angeordnet ist, die von dem Arbeitszylinder und seiner Kolbenstange 12 der Hubvorrichtung 11 etwa im rechten Winkel gemäß dem Doppelpfeil Pf 2 beaufschlagt werden kann. Obwohl also die Hubvorrichtung etwas außerhalb des Bereiches der Entnahmeöffnungen 4 und deshalb schräg angeordnet ist, kann sie unter einem günstigen Winkel an den einzelnen Fachböden 5 angreifen.

Dabei befindet sich diese als Anschlag wirkende Schrägfläche 13 an der Entnahmeöffnung 4 unmittelbar oberhalb der Stützstelle für den Arbeitszylinder und seine Kolbenstange 12.

In nur an einem Fachboden in Fig.3 dargestellter Weise kann der Anschlag für die Hubvorrichtung 11 an der Unterseite des oder der Fachböden 5 nahe der Entnahmeöffnung 4 höhenverstellbar, zum Beispiel als Stellschraube 14 ausgebildet sein, die dann aus dem Fachboden 5 weiter nach unten herausgedreht werden kann, wenn die Querschnittsgröße der gelagerten Hohlprofile 2 größer ist, damit immer mit demselben Hub der Kolbenstange 12 an einer übereinstimmenden Anschlagstelle angegriffen werden kann, selbst wenn die einzelnen Fachböden 5 sich aufgrund einer größeren Querschnittsabmessung der Hohlprofile 2 in einer höheren Position befinden.

Eine ganz wichtige Ausgestaltung der Erfindung, die die Abstützung der Fachböden 5 auf nur einen Teil der unter ihnen lagernden Hohlprofile 2 beschränkt, besteht darin, daß an der Unterseite der Fachböden 5 bzw. der sie bildenden Holme 6 nahe der Entnahmeöffnung 4 eine in Entnahmerichtung orientierte Platte 15 oder dergleichen Verdickung zur Abstützung auf den in dem tieferen Fach 3 befindlichen Profilen 2 angeordnet ist, die mit Abstand vor der Entnahmeöffnung 4 endet. In Fig. 3 wird deutlich, daß innerhalb dieses Abstandes zwischen dem unteren Ende der Platte 15 und der eigentlichen Entnahmeöffnung 4 keine Hohlprofile 2 lagern, oder wenn dort Hohlprofile 2 gelagert sind, diese nicht zur Abstützung der darüber befindlichen Fächer 3 dienen, sondern frei liegen.

An der Entnahmeöffnung 4 erkennt man an der Oberseite der Fachböden 5 jeweils Anschläge 16 mit Abstand zu der an der Unterseite des darüber befindlichen Fachbodens 5 befindlichen Stützplatte 15, gegen welchen Anschlag 16 die jeweils freigegebenen Hohlprofile 2 rutschen können, wo dann das vorderste Hohlprofil an einem Austritt aus der Entnahmeöffnung 4 zunächst gehindert wird und die oberhalb von ihm befindlichen Hohlprofile 2 ebenfalls abstützt. Dabei ist wichtig, daß die Fächer 3 genügend stark geneigt sind, um ein selbsttätiges Nachrutschen der Hohlprofile 2 bis zu den Anschlägen 16 zu ermöglichen, wenn der oberhalb von ihnen befindliche, sie mit der Stützplatte 15 festklemmende Fachboden 5 angehoben wird.

Um also die eigentlich zunächst während der Lagerung eingeklemmten Hohlprofile dennoch entnehmen zu können, genügt es, den oberhalb der jeweiligen Entnahmeöffnung 4 befindlichen Fachboden 5 anzuheben, so daß so viele Hohlprofile aus der ursprünglichen Klemmstellung freigegeben und nachrutschen können, bis der Abstand zwischen der Stützplatte 15 und dem Anschlag 16 aufgefüllt ist. Gleichzeitig rutschen die übrigen Hohlprofile 2 innerhalb dieses so zeitweilig in seiner Höhe vergrößerten Faches 3 nach und werden nach dem Absenken des Fachbodens 5 wieder eingeklemmt und verstärken dann wiederum die Stabilität des gesamten Regales. Nach der Entnahme einer Anzahl von Hohlprofilen 2 kann somit zu einer beliebigen Zeit auch wieder eine Beschickung des entsprechenden Faches 3 erfolgen.

Damit die Entnahme und auch die Beschickung jeweils an derselben Stelle geschehen kann, also die Hubvorrichtung 11 nicht an die Lage der Fächer angepaßt werden muß, ist im Ausführungsbeispiel vorgesehen, daß die im Sinne einer Gleitebene für die zu entnehmenden Profile 2 schräg angeordneten Fächer 3 an einem auf- und abbewegbaren Stützgestell 17 und dieses wiederum an einem Hubtisch 18 befestigt ist, welcher Hubtisch im Ausführungsbeispiel mittels Hubscheren 19 in seiner Höhe verstellbar ist, so daß also dadurch das gesamte Regal und vor allem dessen Fächer 3 und die Entnahmeöffnungen 4 jeweils auf die Höhe einer Übergabe, im Ausführungsbeispiel eines Übergabetisches 20 angepaßt werden können, das heißt, die einzelnen Entnahmeöffnungen 4 sind durch Heben und Senken des Hubtisches 18 und damit des Regales 1 und seiner Fächer 3 jeweils auf das Niveau eines Übergabetisches 20 einstellbar.

In Fig.1 erkennt man, daß im Bereich der Beschickungs- oder Zuführöffnungen 7 eine Zuführbahn 21 für quer zu den Fächern 3 in diese einschiebbare Profile 2 vorgesehen ist, auf deren Höhe die Zuführöffnungen 7 der Fächer 3 einstellbar sind, wobei die gegenüber dem Übergabetisch 20 erhöhte Zuführung im Ausführungsbeispiel um das Maß höher liegt, um welches die Zuführöffnung 7 eines Faches 3 gegenüber seiner Entnahmeöffnung 4 erhöht ist, so daß die Beschickung sogar gleichzeitig mit der Entnahme erfolgen könnte. Dabei kann die Zuführbahn 21 gegebenenfalls unmittelbar an den Holmen 6 oder Fachböden 5 ankuppelbar sein, um ein geringes Spiel oder dergleichen ausschließen und einen glatten Übergang beim Beschicken schaffen zu können.

Die U-förmigen Halter 9 sind gemäß Fig.2 u.4 an dem Stützgestell 17 angebracht, welches mit Hilfe des Hubtisches 18 zur Einstellung der jeweiligen Regalhöhe auf- und abbewegt werden kann.

Gemäß Fig.1 u.2 sind die Arbeitszylinder der Hubvorrichtung 11 an dem Übergabetisch 20 gelagert und gegenüber einer Vertikalen schräg zu den Entnahmeöffnungen 4 hin derart geneigt, daß der bewegliche Teil, also im Ausführungsbeispiel die Kolbenstange 12, in Gebrauchsstellung an der Entnahmeöffnung 4 und an dem dort befindlichen Anschlag 16 und somit auch an dem an diesem anliegenden Profil 2 vorbeigeführt ist, also von den in dem Freiraum zwischen Stützplatte 15 und Anschlag 16 liegenden Hohlprofilen 2 nicht berührt wird.

Um anschließend Profile 2 aus diesem Freiraum entnehmen zu können, kann die Kolbenstange 12 in die in Fig.3 mit gestrichelten Linien dargestellte Ruhestellung unterhalb des Niveaus des Übergabetisches 20 zurückgezogen werden. Die Kolbenstange 12 durchsetzt dazu jeweils eine an der Übergabestelle befindliche Lochung 22 oder Ausnehmung oder einen sonstigen Durchbruch des Übergabetisches 20 und ist beim Entnehmen der von der Stützplatte 15 freigegebenen und gegen den Anschlag 16 gerutschten Profile 2 unter das Tischniveau zurückgezogen.

Im Ausführungsbeispiel sind die Anschläge 16 an der Entnahmeöffnung 4 fest, denn oberhalb der Anschläge 16 ist aufgrund der schrägen Angriffsflächen für die Kolbenstange 12 ein genügend großer Abstand, um die einzelnen Hohlprofile 2 über die Anschläge 16 aus den Entnahmeöffnungen 4 ausheben zu können. Denkbar wäre jedoch auch, daß die Anschläge 16 rückziehbar und unter das Niveau der Fachböden 5 absenkbar sind und/oder daß Greifer zum Erfassen der Profile 2 vorgesehen sind, so daß statt der Entnahme von Hand, die beim Ausführungsbeispiel vorgesehen ist, auch eine automatisierte Entnahme möglich ist.

In Fig.4 erkennt man, daß die U-förmigen Halter 9 jeweils durch einstellbare Abstandhalter voneinander getrennt sind, das heißt, die Abstände der einzelnen Fachböden 5 und damit die Höhe der Fächer 3 sind zur Anpassung an unterschiedliche Querschnitte der zu lagernden Profile 2 verstellbar. Hinzu kommt dann noch das Spiel 10 innerhalb der Halter 9, um die Fachhöhe für die Entnahme von Hohlprofilen kurzzeitig so weit vergrößern zu können, daß die unter der Stützplatte 15 eingeklemmten Hohlprofile 2 freigegeben werden. Dabei sind zum Verstellen der Fachhöhen an den die einzelnen Holme verbindenden Querträgern 8 an dem Stützgestell 17 des Hubtisches 18 zwischen den U-förmigen Haltern 9 abstandhaltende Stellschrauben als Abstandhalter 23 vorgesehen.

Um die gelagerten Hohlprofile trotz ihrer Einklemmung zu schonen, können die Abstützplatten 15 aus Kunststoff bestehen.

In Fig.1 erkennt man noch, daß die Abstützplatten 15 den Beschickungsbereich zum Nachfüllen von Profilen 2 freilassen und zwar bis in einen Bereich, der beim Anheben eines Fachbodens 5 zur Entnahme noch mitangehoben wird. Dies erleichtert das Nachrutschen von nachgefüllten Profilen in den Bereich der Abstützplatte 15, so daß diese dann nach einem Entnahmevorgang zur Abstützung mit zur Verfügung stehen und trotz der Entnahme einzelner Hohlprofile 2 die Gesamtstabilität des Lagergestelles und der darin gelagerten Profile erhalten bleibt. In Fig.1 ist angedeutet, daß die Stützplatte 15 etwa bis in die Mitte der Entnahmeöffnung 4 und der Zuführöffnung 7 des jeweiligen Faches 3 reichen kann. Vor allem eine aus Kunststoff bestehende Abstützplatte 15 kann auch gut daran angepaßt werden, daß die Fachböden 5 und die sie bildenden Holme 6 elastisch, biegsam und durch ihre Füllung und die daraus resultierende Belastung gegen die unter ihnen lagernden Profile 2 verformbar und beim Anheben gegenüber einer von der Entnahmeöffnung 4 entfernten Auflage in den U-förmigen Halter 9 etwas nach oben bewegbar und biegbar sind. Um den Neigungswinkel der Fächer nicht zu groß machen zu können, dennoch aber ein sicheres Abwärts- und Nachrutschen der Hohlprofile zu erreichen, können die Fachböden 5 und die sie bildenden Holme 6 an ihrer Oberseite mit einer gleitfähigen Auflage 24 oder eventuell einer gleitfähigen Beschichtung versehen sein, die somit aus den Holmen 6 gleichzeitig Gleitbahnen für die Profile 2 macht. Selbstverständlich ist bei der gesamten Regalkonstruktion das unterste Fach so abgestützt oder ausgesteift, daß sein Fachboden 5, der der sich nicht auf tieferliegenden Profilen 2 abstützen kann, weitgehend unverformt bleibt und dennoch die auf ihm lagernde Belastung aufnehmen kann. Die darüber befindlichen Fächer und Fachböden können jedoch aufgrund der Mitverwendung der gelagerten Hohlprofile zur gegenseitigen Abstützung und Aussteifung leicht und preiswert ausgebildet sein.

Das Regel 1 bzw. Fächermagazin zur Lagerung von Hohlprofilen 2, beispielsweise zur Herstellung von Abstandhalter-Rahmen für Isolierglasscheiben, hat mehrere übereinander befindliche, gegen eine Entnahmeöffnung 4 hin geneigte Fächer 3, aus denen die Profile 2 quer zu ihrer Längserstreckung entnommen werden können. Während der Lagerung stützen sich die jeweils nächsthöheren Fachböden 5 auf den unter ihnen befindlichen Profilen 2 ab, die somit zur Aussteifung und Stabilisierung des Regales 1 beitrage, jedoch sind zum Entnehmen von Profilen 2 diese sich abstützenden Fachböden 5 jeweils anhebbar. Die einzelnen Fächer und Fachböden können somit so leicht gebaut sein, daß sie ohne die Abstützung auf den nächst tieferen Fächern und deren Inhalt die von Innen getragene Beladung eigentlich nicht ohne Verformung aufnehmen könnten. Dies führt gleichzeitig zu einer platzsparenden und preiswerten Konstruktion.

## Patentansprüche

1. Regal (1) zur Lagerung von Hohlprofilen (2) zur Herstellung von Abstandhalter-Rahmen für Isolierglasscheiben oder von sonstigen Profilen, Schienen, Stangen, Stäben oder dergleichen Langmaterial, mit mehreren übereinander angeordneten Fächern (3), wobei die Profile (2) in Längsrichtung der Fächer (3) lagerbar sind und beim Entnehmen quer zur ihrer Längserstreckung aus Entnahmeöffnungen (4) der Fächer (3) entnehmbar sind, **dadurch gekennzeichnet,** daß die Fachböden (5) im Sinne einer Vergrößerung und einer Verkleinerung der Fachhöhe wenigstens im Bereich der Entnahmeöffnung (4) auf- und abbewegbar sind und daß jeweils der nächst höhere Fachboden (5) auf den in dem unter ihm befindlichen Fach (3) gelagerten Profilen (2) abstützbar und - zum Entnehmen von Profilen (2) - anhebbar ist.

2. Regal nach Anspruch 1, dadurch gekennzeichnet, daß die Fächer (3) und die vorzugsweise aus quer zu den gelagerten Profilen (2) angeordneten Holmen (6) oder dergleichen bestehenden Fachböden schräg zu der Entnahmeöffnung (4) der Fächer (3) hin geneigt sind.

3. Regal nach Anspruch 1 oder 2, dadurch gekennzeichnet, daß an der den Entnahmeöffnungen (4) abgewandten Seite des Regales und der Fächer (3) Zuführöffnungen (7) zum Beschicken des Regales (1) vorgesehen sind.

4. Regal nach einem der Ansprüche 1 bis 3, dadurch gekennzeichnet, daß die Fachböden (5) und die sie bildenden Holme (6) in ihrem den Entnahmeöffnungen (4) abgewandten Bereich beweglich gelagert sind, und daß an der Entnahmeöffnung (4) eine Hubvorrichtung (11), vorzugsweise wenigstens ein Hubzylinder oder dergleichen vorgesehen ist, dessen bei Druckbeaufschlagung in Längsrichtung verstellbarer Teil (12) jeweils den über einem zu entleerenden Fach (3) befindlichen Fachboden (5) untergreift.

5. Regal nach einem der Ansprüche 1 bis 4, dadurch gekennzeichnet, daß der Anschlag für die Hubvorrichtung (11) an der Unterseite des/der Fachböden (5) nahe der Entnahmeöffnung (4)höhenverstellbar, insbesondere als Stellschraube (14) ausgebildet ist.

6. Regal nach einem der Ansprüche 1 bis 5, dadurch gekennzeichnet, daß an der Unterseite der Fachböden (5) bzw. der sie bildenden Holme (6) nahe der Entnahmeöffnung (4) eine in Entnahmerichtung orientierte Platte (15) oder dergleichen Verdickung zur Abstützung auf den in dem tieferen Fach (3) befindlichen Profilen (2) angeordnet ist, die mit Abstand vor der Entnahmeöffnung (4) endet.

7. Regal nach einem der Ansprüche 1 bis 6, dadurch gekennzeichnet, daß an der Entnahmeöffnung (4) an der Oberseite der Fachböden (5) oder der sie bildenden Holme Anschläge (16) mit Abstand zu der an der Unterseite des darüber befindlichen Fachbodens (5) befindlichen Stützplatte (15) angeordnet sind.

8. Regal nach einem der Ansprüche 1 bis 7, dadurch gekennzeichnet, daß die insbesondere schräg im Sinne einer Gleitebene für die zu entnehmenden Profile (2) angeordneten Fächer an einem auf- und abbewegbaren Stützgestell (17) vorzugsweise an einem Hubtisch insbesondere mit Hubscheren (19), befestigt sind und daß im Bereich der Entnahmeöffnungen eine Übergabe insbesondere ein Übergabetisch (20) angeordnet ist, auf dessen Niveau die einzelnen Entnahmeöffnungen (4) durch Heben und Senken des Hubtisches (18) einstellbar sind.

9. Regal nach einem der Ansprüche 1 bis 8, dadurch gekennzeichnet, daß im Bereich der Zuführöffnungen (7) eine Zufuhrbahn (21) für quer zu den Fächern (3) einschiebbare Profile (2) vorgesehen ist, auf deren Höhe die Zuführöffnungen (7) der Fächer (3) einstellbar sind, wobei die gegenüber dem Übergabetisch (20) erhöhte Zuführung vorzugsweise um das Maß höher liegt, um welches die Zuführöffnung (7) eines Faches (3) gegenüber seiner Entnahmeöffnung (4) erhöht ist.

10. Regal nach einem der Ansprüche 1 bis 9, dadurch gekennzeichnet, daß an der Unterseite der die Fachböden (5) bildende Holme (6) unmittelbar unterhalb ihrer Enden eine Schrägfläche (13) angeordnet ist, die von dem Arbeitszylinder und seiner Kolbenstange (12) etwa im rechten Winkel beaufschlagt ist.

11. Regal nach einem der Ansprüche 1 bis 10, dadurch gekennzeichnet, daß sich der Anschlag an der Entnahmeöffnung (4) unmittelbar oberhalb der Stützstelle für den Arbeitszylinder und seine Kolbenstange (12) befindet.

12. Regal nach einem der Ansprüche 1 bis 11, dadurch gekennzeichnet, daß der Arbeitszylinder an dem Übergabetisch (20) gelagert ist und gegenüber einer Vertikalen schräg zu den Entnahmeöffnungen (4) hin derart geneigt ist, daß sein bewegliches Teil, vorzugsweise die Kolbenstange (12) in Gebrauchsstellung an der Entnahmeöffnung (4) und an dem Anschlag (16) und dem an diesem anliegenden Profil (2) vorbeigeführt ist.

13. Regal nach einem der Ansprüche 1 bis 12, dadurch gekennzeichnet, daß die Kolbenstange (12) jeweils eine an der Übergabestelle befindliche Lochung (22), Ausnehmung oder dergleichen Durchbruch des Übergabetisches (20) durchsetzt und beim Entnehmen der von der Stützplatte (15) freigegebenen und gegen Anschlg (16) gerutschten Profile (2) unter das Tischniveau zurückziehbar ist.

14. Regal nach einem der Ansprüche 1 bis 13, dadurch gekennzeichnet, daß die Anschläge (16) an der Entnahmeöffnung (4) rückziehbar und/oder Greifer zum Erfassen der zwischen der Stützplatte an der Unterseite des nächst höheren Fachbodens und der am Ende des Fachbodens befindlichen Anschläge angeordneten Profile vorgesehen sind.

15. Regal nach einem der Ansprüche 1 bis 14, dadurch gekennzeichnet, daß die Abstände der einzelnen Fachböden (5) und damit die Höhe der Fächer (3) zur Anpassung an unterschiedliche Querschnitte der zu lagernden Profile (2) verstellbar sind.

16. Regal nach einem der Ansprüche 1 bis 15, dadurch gekennzeichnet, daß zum Verstellen der Fachböhen an den die einzelnen Holme verbindenden Querträgern (8) vorzugsweise an dem Stützgestell (17) des Hubtisches (18) abstandhaltende Stellschrauben vorgesehen sind.

17. Regal nach einem der Ansprüche 1 bis 16, dadurch gekennzeichnet, daß die Abstützplatten (15) aus Kunststoff bestehen.

18. Regal nach einem der Ansprüche 1 bis 17, dadurch gekennzeichnet, daß die Abstützplatten (15) den Beschickungsbereich zum Nachfüllen von Profilen (2) freilassen, insbesondere bis in den Bereich, der beim Anheben eines Fachbodens (5) zur Entnahme noch mitangehoben wird.

19. Regal nach einem der Ansprüche 1 bis 18, dadurch gekennzeichnet, daß die Stützplatte (15) etwa bis in die Mitte zwischen der Entnahmeöffnung (4) und der Beschickungs- oder Zuführöffnung (7) des jeweiligen Faches (3) reicht.

20. Regal nach einem der Ansprüche 1 bis 19, dadurch gekennzeichnet, daß die Fachböden (5) und die sie bildende Holme (6) elastisch, biegsam und durch ihre Füllung gegen die unter ihnen lagernden Profile (2) verformbar und beim Anheben gegenüber einer von der Entnahmeöffnung (4) entfernten Auflage etwas nach oben biegbar sind.

21. Regal nach einem der vorstehenden Ansprüche, dadurch gekennzeichnet, daß die Fachböden (5), insbesondere die sie bildenden Holme (6), an ihrer Oberseite mit einer gleitfähigen Auflage (24) oder Beschichtung versehen sind.

## Claims

1. A rack (1) for storing hollow profiles (2) to manufacture spacer frames for insulating glass panes, or for storing other profiles, rails, bars, rods or like long stock, the rack having a plurality of superposed partitions (3) in whose longitudinal direction the profiles (2) are storable, and during unloading the profiles (2) being removable transversely to their longitudinal expanse from unloading openings (4) of the partitions (3), **characterized** **in that** the stages (5) are movable up and down at least in the area of the unloading opening (4) so as to increase and decrease the height of the partitions, and that the next higher stage (5) in each case is adapted to be supported on the profiles (2) stored in the partition (3) beneath and is liftable to remove profiles (2).

2. A rack as claimed in claim 1, characterized in that the partitions (3) and the stages (6) preferably consisting of bars (6) or the like arranged crosswise to the stored profiles (2) are inclined towards the unloading opening (4) of the partitions (3).

3. A rack as claimed in claim 1 or claim 2, characterized in that feed openings (7) for loading the rack (1) are provided at that end of the rack (1) and of the partitions (3) which is opposite the unloading openings (4).

4. A rack as claimed in any one of claims 1 to 3, characterized in that the stages (5) and bars (6) constituting the same are freely supported in their zone averted from the unloading openings (4), and that provided at the unloading opening (4) there is a lifting device (11), preferably at least one lifting cylinder or the like, the part (12) thereof displaceable in a longitudinal direction under pressure engaging under the stage (5) situated above a partition (3) to be emptied.

5. A rack as claimed in any one of claims 1 to 4, characterized in that the stop which serves for application of the lifting device (11) and is situated at the underside of the stage/stages (5) near the unloading opening (4) is devised to be vertically adjustable, in particular takes the form of an adjusting screw (14).

6. A rack as claimed in any one of claims 1 to 5, characterized in that arranged at the underside of the stages (5) and bars (6) constituting the same, near the unloading opening (4), is a plate (15) or like thickening oriented in the direction of unloading, said plate or the like serving for support on the profiles (2) situated in the lower partition (3) and ending spaced in front of the unloading opening (4).

7. A rack as claimed in any one of claims 1 to 6, characterized in that arranged at the unloading opening (4), at the top side of the stages (5) or bars constituting the same, there are stops (16) in spaced relationship to the support plate (15) situated at the underside of the stage (5) above.

8. A rack as claimed in any one of claims 1 to 7, characterized in that the partitions (3), particularly ones of slanting arrangement in the manner of a sliding plane for the profiles (2) to be unloaded, are mounted on a support frame (17) movable up and down, preferably on a lift table particularly with a scissor-type elevating mechanism (19), and that arranged in the vicinity of the unloading openings is a transfer means, in particular a transfer table (20), the individual unloading openings (4) being adjustable to the level of said transfer means by lifting and lowering the lift table (18).

9. A rack as claimed in any one of claims 1 to 8, characterized in that in the region of the feed openings (7) a feedway (21) is provided for profiles (3) insertable crosswise to the partitions (3), the feed openings (7) of the partitions (3) being adjustable to the height of said feedway, the feed superior to the transfer table (20) preferably being higher by the measure to which the feed opening (7) of a partition (3) is superior to its unloading opening (4).

10. A rack as claimed in any one of claims 1 to 9, characterized in that arranged at the underside of and directly under the ends of the bars (6) constituting the stages (5) is a slope (13) to which the working cylinder and its piston rod (12) are applied approximately at right angles.

11. A rack as claimed in any one of claims 1 to 10, characterized in that the stop at the unloading opening (4) is located directly above the support for the working cylinder and its piston rod (12).

12. A rack as claimed in any one of claims 1 to 11, characterized in that the working cylinder is mounted at the transfer table (20) and is inclined relative to a perpendicular slantingly towards the unloading openings (4) in such a way that in the position of use the movable part thereof, preferably the piston rod (12), is conducted past the unloading opening (4) and past the stop (16) and the profile (2) resting against the latter.

13. A rack as claimed in any one of claims 1 to 12, characterized in that the piston rod (12) traverses a hole (22) or recess situated at the point of transfer or passes through a like opening in the transfer table (20) and is retractable under the level of the table when profiles (2) which have been released by the support plate (15) and have slid against the stop (16) are removed.

14. A rack as claimed in any one of claims 1 to 13, characterized in that the stops (16) at the unloading opening (4) are withdrawable and/or grippers are provided for taking hold of the profiles arranged between the support plate at the underside of the next higher stage and the stops situated at the end of the stage.

15. A rack as claimed in any one of claims 1 to 14, characterized in that the spacing of the individual stages (5) and thereby the height of the partitions (3) are adjustable for adaptation to different cross sections of the profiles (2) to be stored.

16. A rack as claimed in any one of claims 1 to 15, characterized in that for adjusting the stages, spacing adjusting screws are provided at the cross members (8) connecting the individual bars, preferably at the support frame (17) of the lift table (18).

17. A rack as claimed in any one of claims 1 to 16, characterized in that the support plates (15) consist of plastic.

18. A rack as claimed in any one of claims 1 to 17, characterized in that the support plates (15) keep the loading area for refilling profiles (2) free, in particular right into the area still raised when a stage (5) is lifted for unloading.

19. A rack as claimed in any one of claims 1 to 18, characterized in that the support plate (15) extends to about halfway between the unloading opening (4) and the loading or feed opening (7) of the respective partition (3).

20. A rack as claimed in any one of claims 1 to 19, characterized in that the stages (5) and bars (6) constituting the same are elastic, flexible and are deformable by their charge towards the profiles (2) stored under them and, when raised, are capable of being bent upwards slightly relative to a support remote from the unloading opening (4).

21. A rack as claimed in any one of the preceding claims, characterized in that the upper surface of the stages (5), particularly of the bars (6) constituting the same, are provided with a slidable covering (24) or coating.

## Revendications

1. Rayonnage (1) pour le stockage de profilés creux (2) destinés à réaliser des cadres écarteurs pour vitres isolantes, ou pour le stockage de tous autres profilés, rails, tiges, barres ou produits longs similaires, avec plusieurs casiers (3) superposés, les profilés (2) pouvant être stockés dans le sens longitudinal des casiers (3) et déchargés transversalement à leur développement longitudinal par des ouvertures de déchargement (4) des casiers (3),
**caractérisé** en ce que les fonds (5) des casiers peuvent être relevés ou abaissés afin d'augmenter ou réduire la hauteur des casiers, au moins dans la région de l'ouverture de déchargement (4), et en ce que le fond (5) du casier immédiatement supérieur peut chaque fois s'appuyer sur les profilés (2) stockés dans le casier (3) sous-jacent, et peut être soulevé afin de décharger des profilés (2).

2. Rayonnage selon la revendication 1, **caractérisé** en ce que les casiers (3) et les fonds de casier, constitués de préférence de longerons (6) ou similaires disposés transversalement aux profilés stockés (2), sont inclinés en oblique vers l'ouverture de déchargement (4) des casiers (3).

3. Rayonnage selon la revendication 1 ou 2, **caractérisé** en ce que, pour le chargement du rayonnage (1), des ouvertures d'alimentation (7) sont prévues sur le côté du rayonnage (1) et des casiers (3) qui est opposé aux ouvertures de déchargement (4).

4. Rayonnage selon l'une quelconque des revendications 1 à 3, **caractérisé** en ce que les fonds de casier (5), et les longerons (6) qui les constituent, sont montés mobiles dans leur région éloignée des ouvertures de déchargement (4), et en ce qu'un dispositif de levage (11), de préférence au moins un vérin ou similaire, est prévu dans la région de l'ouverture de déchargement (4), dispositif dont la partie (12), mobile en direction longitudinale lors de la sollicitation en pression, agit par le dessous sur le fond de casier (5) se trouvant au-dessus d'un casier (3) à décharger.

5. Rayonnage selon l'une quelconque des revendications 1 à 4, **caractérisé** en ce que la butée pour le dispositif de levage (11), prévue sur le dessous du/des fonds de casier (5) au voisinage de l'ouverture de déchargement (4), est réalisée réglable en hauteur, notamment sous la forme d'une vis de réglage (14).

6. Rayonnage selon l'une quelconque des revendications 1 à 5, **caractérisé** en ce qu'une plaque (15) ou épaississement similaire, orientée dans la direction de déchargement, est disposée sur le dessous des fonds de casier (5) ou encore des longerons (6) qui les constituent, afin qu'ils s'appuient sur les profilés (2) stockés dans le casier sous-jacent (3), et elle se termine à distance de l'ouverture de déchargement (4).

7. Rayonnage selon l'une quelconque des revendications 1 à 6, **caractérisé** en ce que des butées (16) sont disposées, dans la région de l'ouverture de déchargement (4), sur le dessus des fonds de casier (5) ou des longerons qui les constituent, à distance de la plaque de soutien (15) présente sur le dessous du fond de casier (5) immédiatement supérieur.

8. Rayonnage selon l'une quelconque des revendications 1 à 7, **caractérisé** en ce que les casiers (3), disposés notamment en oblique afin de constituer un plan de glissement pour les profilés (2) à décharger, sont fixés sur un bâti de soutien (17) relevable et abaissable, de préférence sur une table de levage présentant notamment des leviers croisés (19), et en ce qu'un dispositif de transfert, notamment une table de transfert (20), est disposé dans la région des ouvertures de déchargement, les différentes ouvertures de déchargement (4) pouvant être réglées au niveau de cette table de transfert (20) en relevant et abaissant la table de levage (18).

9. Rayonnage selon l'une quelconque des revendications 1 à 8, **caractérisé** en ce qu'une bande transporteuse d'alimentation (21), pour des profilés (2) pouvant être enfilés transversalement aux casiers (3), est prévue dans la région des ouvertures d'alimentation (7), les ouvertures d'alimentation (7) des casiers (3) pouvant être réglées à la hauteur de cette bande (21) et le dispositif d'alimentation, qui est surélevé par rapport à la table de transfert (20), étant de préférence surélevé d'une hauteur égale à la hauteur de surélévation de l'ouverture d'alimentation (7) d'un casier (3) par rapport à son ouverture de déchargement (4).

10. Rayonnage selon l'une quelconque des revendications 1 à 9, **caractérisé** en ce qu'une face oblique (13) est disposée sur le dessous des longerons (6) constituant les fonds de casier (5), juste en dessous de leurs extrémités, et elle est sollicitée environ à angle droit par le vérin de travail et sa tige de piston (12).

11. Rayonnage selon l'une quelconque des revendications 1 à 10, **caractérisé** en ce que la butée prévue dans la région de l'ouverture de déchargement (4), se trouve juste au-dessus du point de support pour le vérin de travail et sa tige de piston (12).

12. Rayonnage selon l'une quelconque des revendications 1 à 11, **caractérisé** en ce que le vérin de travail est monté sur la table de transfert (20) et est incliné, par rapport à la verticale, en oblique en direction des ouvertures de déchargement (4) de telle sorte que sa partie mobile, de préférence la tige de piston (12), passe, en position d'utilisation, devant l'ouverture de déchargement (4), la butée (16) et le profilé (2) appuyé contre cette butée.

13. Rayonnage selon l'une quelconque des revendications 1 à 12, **caractérisé** en ce que la tige de piston (12) traverse un perçage (22), évidement ou ajour similaire, qui se trouve au point de transfert, de la table de transfert (20), et peut être rétractée en dessous du niveau de la table lors du déchargement des profilés (2) qui ont été libérés par la plaque de soutien (15) et ont avancé jusqu'à la butée (16).

14. Rayonnage selon l'une quelconque des revendications 1 à 13, **caractérisé** en ce que les butées (16) prévues dans la région de l'ouverture de déchargement (4) sont rétractables, et/ou des preneurs sont prévus pour saisir les profilés disposés entre la plaque de soutien, présente sur le dessous du fond de casier immédiatement supérieur, et les butées, présentes à l'extrémité du fond du casier.

15. Rayonnage selon l'une quelconque des revendications 1 à 14, **caractérisé** en ce que les distances entre les différents fonds de casier (5), et donc la hauteur des casiers (3), sont réglables afin de s'adapter à des sections différentes des profilés (2) à stocker.

16. Rayonnage selon l'une quelconque des revendications 1 à 15, **caractérisé** en ce qu'afin de régler la hauteur des casiers des vis de réglage écarteuses sont prévues sur les traverses (8) reliant les différents longerons, de préférence sur le bâti de soutien (17) de la table de levage (18).

17. Rayonnage selon l'une quelconque des revendications 1 à 16, **caractérisé** en ce que les plaques de soutien (15) sont réalisées en matière plastique.

18. Rayonnage selon l'une quelconque des revendications 1 à 17, **caractérisé** en ce qu'afin de remplir le rayonnage de profilés (2), les plaques de soutien (15) laissent libre la zone de chargement, notamment jusque dans la région qui, lors du soulèvement d'un fond de casier (5) pour le déchargement, est encore conjointement soulevée.

19. Rayonnage selon l'une quelconque des revendications 1 à 18, **caractérisé** en ce que la plaque de soutien (15) s'étend environ jusqu'au milieu entre l'ouverture de déchargement (4) et l'ouverture de chargement ou d'alimentation (7) du casier respectif (3).

20. Rayonnage selon l'une quelconque des revendications 1 à 19, **caractérisé** en ce que les fonds de casier (5) et les longerons (6) qui les constituent sont élastiques, flexibles, déformables par leur remplissage contre les profilés (2) stockés en dessous d'eux et, lors du soulèvement, légèrement flexibles vers le haut par rapport à un point d'appui distant de l'ouverture de déchargement (4).

21. Rayonnage selon l'une quelconque des revendications précédentes, **caractérisé** en ce que les fonds de casier (5), notamment les longerons (6) qui les constituent, sont pourvus sur leur côte supérieur d'un revêtement (24) ou enduction permettant le glissement.
